# EUROPEAN PATENT SPECIFICATION

(11) **EP 0 638 244 B1**
(45) Date of publication and mention of the grant of the patent: **02.04.2003**
(21) Application number: 94904356.6
(22) Date of filing: 17.12.1993
(51) Int. Cl.: C08B 3/02, C08B 3/06

(54) **CATALYTIC SYSTEM FOR THE ACYLATION OF CELLULOSE AND A PROCESS FOR PRODUCING AND USING SAID CATALYTIC SYSTEM**
KATALYTISCHES SYSTEM ZUR ACYLIERUNG VON CELLULOSE UND EIN VERFAHREN ZUR HERSTELLUNG UND VERWENDUNG DIESES KATALYTISCHEN SYSTEMES
SYSTEME CATALYTIQUE D'ACYLATION DE CELLULOSE ET PROCEDE DE PRODUCTION ET D'UTILISATION DUDIT SYSTEME CATALYTIQUE

(30) Priority: 25.12.1992 RU 92014660; 25.12.1992 RU 92014662
(43) Date of publication of application: 15.02.1995
(73) Proprietor: TOVARISCHESTVO S OGRANICHENNOI OTVETSTVENNOSTJU "EFIRY TSELLJULOZY", Vladimir, 600016 (RU)
(72) Inventor: GRISHIN, Eduard Pavlovich, Vladimir, 600031 (RU); BONDAR, Valentin Ananievich, Vladimir, 600018 (RU); MIRONOV, Dmitry Petrovich, Vladimir, 600031 (RU); SHAMOLIN, Anatoly Ivanovich, Vladimir, 600031 (RU)
(74) Representative: W.P. Thompson & Co.
(86) International application number: PCT/RU93/00307
(87) International publication number: WO 94/014344

(56) References cited:
- GB-A- 1 120 074
- SU-A- 1 827 379
- US-A- 2 705 710
- US-A- 4 329 447

## Description

### Technical Field

The present invention relates to a catalytic system for cellulose acylation and to processes for producing said catalytic system and its application for cellulose acylation and synthesis of acetone-soluble primary cellulose acetates.

The aforesaid catalytic system incorporates as the base an adduct of sulfuric acid and an aliphatic acid N,N-dialkylamide (DAA). No direct reference to the presence or formation of said adduct in the reaction medium for producing cellulose esters. At the same time a number patents describe nonindustrial processes for synthesis of cellulose esters, wherein said adduct, in our opinion, may be formed and may function as a specific catalyst. Such processes are recommended for carrying into effect an accelerated process of cellulose acetylation at high temperatures, with maintaining high degree of polymerization of the product obtained.

Cellulose esters produced with the use of said catalytic system are used in traditional fields, e.g., for producing artificial fibers, cigarette stick, cine and photographic materials, commercial and household-use plastics, lacquers and varnishes, surface-coating materials, and for other applications.

### Background Art

US Patent A, 2,705,710 discloses a cellulose acetylation process which, in our opinion, (since no direct reference is given in said Patent) incorporates formation of an adduct of sulfuric acid with N,N-dialkylamide (DAA) selected from the group consisting of N,N-dimethylformamide (DMFA), N,N-diethylformamide (DEFA), N,N-dimethylacetamide (DMAA), and N,N-diethylacetamide (DEAA), said adduct being dissolved in a great amount of the respective amide. The inventors have to use a large proportion of amide (450 moles per mole of sulfuric acid) which, in our opinion, enables one to suppress an excess high-temperature dissociation of the adduct into free sulfuric acid and amide, thereby retaining an increased degree of polymerization of the cellulose triacetate being synthesized. This, however, results in too a high acetylation module and therefore complicates the process of regeneration of a mixture of a large number of solvents (acetic acid and N,N-dialkylamide).

Known in the present state of the art is a process for producing primary acetone-soluble cellulose acetates, using titanium compound as the catalyst (US, A, 2,976,277), wherein a "homogeneous" acetylation mechanism takes place. A disadvantage inherent in said process resides in that acetylation is conducted in the medium of acetic anhydride with a high module of acetylation equal to 13, the amount of acetic anhydride used being more than 7 times that required according to theory. In addition, the process is conducted at rather high temperatures equal to 136-137°C.

One prior-art process for producing primary low-substituted cellulose esters is known commonly (JP, A, 57-35, 451), said process featuring the homogeneous cellulose acylation conditions (in a cellulose solution in N,N-dimetylacetamide with lithium chloride), and the resultant formation of low-substituted cellulose esters, including cellulose acetate soluble in an acetone-water mixture, the acetylation module being about 40. The process in question, however, fails to produce primary acetone-soluble cellulose acetates and features a complicated process of regeneration of a mixture of great amounts of solvents, i.e., N,N-dimethylacetamide and acetic acid.

One more prior-art process for producing acetone--soluble primary cellulose acetates is known (Chemical Abstracts, V. 52, N°.14, July 25, 1958, p. 14169a), wherein the process is conducted in a medium containing acetic acid and acetic anhydride, with a much lower acetylation module than specified above, that is, 8 at a temperature of below 33°C. According to the process under discussion, cellulose acetylation is carried out in the presence of a large amount of free sulfuric acid, i.e., 20-45% of the weight of cellulose. A disadvantage of the process is a relatively low degree of polymerization of the resultant product, that is, 160, as well as comparatively high acetylation module equal to 8.

A further state-of-the-art process for producing primary cellulose acetates in a medium of N,N-dimethylformamide is known to use as the catalyst a mixture called a "complex" by the inventors, comprising 600-800 wt.pt. of N,N-dimethylformamide and 20-40 wt.pt. of sulfuric acid (SU, A, 1,237,671). Primary cellulose acetates are produced as follows: the parent cellulose is activated with said "complex" at 60-80°C for one hour, whereupon acetylation is carried out in the presence of said "complex". The resultant product is subjected to desulfation, the catalyst is neutralized, and the end product is extracted by a conventional technique. The end product is acetone-soluble and has a specific viscosity of 0.36-0.68. Disadvantages of the process reside in a high acetylation module equal to 10 and a complicated process of regeneration of a mixture of a great amount of solvent, i.e., N,N-dimethylformamide and acetic acid. In addition, the patent contains an inexact information about the composition of the "complex" used, which, in our opinion, is in fact a solution of the adduct of N,N-dimethylformamide and sulfuric acid in N,N-dimethylformamide.

According to the first aspect of the present invention, there is provided use in a cellulose acylation catalytic system of a adduct of sulfuric acid with N,N- dimethylacetamide with the following ratio of components:

| | |
|---|---|
| adduct of sulfuric acid with N,N- dimethylacetamide | 1,0 |
| and either free sulfuric acid | 0.03-0.49 |
| on free N,N- dimethylacetamide | 0.1 - 0.4 |

The purpose of one or more embodiments of the present invention is to provide a catalytic system which is capable of synthesis of cellulose esters with a minimized acylation module equal to 3-7, in a medium of aliphatic acid - aliphatic anhydride

The principal component of the herein-proposed catalytic system is the adduct, which is an equimolar complex compound of sulfuric acid with N,N-dimethylacetamide.

We have discovered that said complex in a catalytic system with free sulfuric acid incorporates an N-cation, and use of free N,N-dimethylacetamide in the proposed catalytic system results in formation of a complex containing N- and O-cation at a time, whereas the N-cation alone is present in an equimolecular system.

We have also found that an adduct with an N-cation is less stable than an adduct containing N- and O-cations. The fact is evidenced by a difference, by more than two orders, between the values of instability constants of the complex with an N-cation and with an O-cation, calculated by the calorimetric titration technique (at a temperature of 25°C and concentration of the titratable component in acetic acid equal to 0,05 M/l).

The complex composition has been studied by us with the use of IR-spectroscopy in the region of carbonyl group valence vibrations. In this case the spectrum of a complex with an N-cation is featured by an absorption band of 1700 cm⁻¹, and the spectrum of a complex containing an 0-cation has an absorption band of 1600 cm⁻¹.

The other important component of the proposed catalytic system is free sulfuric acid or free N,N-dimethylacetamide. The catalytic system containing free sulfuric acid has a greater number of protons which are formed due to both free sulfuric acid and lower stability of the complex with an N-cation. Said catalytic system is more active in the cellulose acylation processes than a system containing free N,N-dimethylacetamide.

The limit values of the ratio between the components of the proposed catalytic system which determine its practical application for cellulose acylation processes, have been selected experimentally.

Any extension of the thus-selected limits of the values of the ratio between components of the herein-proposed catalytic system results in a reduced degree of polymerization of the finished product and/or an increased duration of the cellulose acylation process.

Similarly, use of a catalytic system containing an adduct alone of sulfuric acid with N,N-dimethylacetamide (without their excess amount) fails to yield any gain both in a higher degree of polymerization of the finished product and in a reduced time of the cellulose acylation process.

The herein-proposed catalytic system may also incorporate an adduct of perchloric acid with N,N-dimethylacetamide in an amount of 50 wt.% of the amount of an adduct of sulfuric acid with N,N-dimethylacetamide, or in a mole ratio of 0.5 per 1 mole of that adduct. Said catalytic system is recommended for synthesis of mixed cellulose esters (i.e., cellulose acetoproprionates and acetobutyrates), because said catalytic system enables one to complete the cellulose acylation reaction using butyric or propionic anhydrides which are less chemically reactive compared with acetic anhydride. The aforesaid ratio between the components of a catalytic system comprising an adduct of perchloric acid with N,N-dimethylacetamide, provides for a synthesis of mixed cellulose esters featuring high substitution with respect to butyric or propionic acid and a low acetylation module. Any change in said ratio between the adducts of sulfuric and perchloric acids affects adversely the quality of the finished product.

Depending on a production process applied the herein--proposed catalytic system may additionally comprise an aliphatic acid having from 2 to 4 carbon atoms (that is, acetic, propionic and/or butyric acid) in an amount of 2 moles per mole of water contained in the parent components.

According to a second aspect of the present invention, there is provided a cellulose acylation process, comprising the reaction of sulfuric acid with N,N- dimethylacetamide in an anhydrous medium to produce the catalytic system according to the first aspect of the present invention, cellulose treatment with acetic acid and treatment of the resultant, activated cellulose with an aliphatic acid anhydride at a temperature of 10 - 90°C in the presence of the catalytic system according to the first aspect of the present invention taken in an amount of 1.5 - 30.0 wt. % of the cellulose weight in terms of sulfuric acid, characterised in that the reaction of sulfuric acid with N,N dimethylacetamide proceeds at a temperature of 0 to 25°C and with the following mole ratio of the parent components:

| | |
|---|---|
| sulfuric acid | 1,0 |
| N,N- dimethylacetamide | 0,67-1,40 |

and in that treatment of the activated cellulose with an aliphatic acid anhydride in the presence of said catalytic system is carried out using a weight ratio of liquid phase to cellulose of 3-7:1.

When preparing the catalytic system, 0.67-1.40 moles of DMAA are taken per mole of sulfuric acid. The present catalytic system is prepared under anhydrous conditions.

Such anhydrous conditions can be established either by using water-free parent components or by adding an aliphatic-acid anhydride in an amount of at least one mole of the anhydride per mole of water for its fixing.

According to the invention, the catalytic system is prepared from N,N-dimethylacetamide and sulfuric acid independently, outside the reaction medium containing cellulose. This makes it possible to prevent production of a substandard cellulose ester under low-module conditions, since there are avoided nonuniform processes of cellulose destruction and acylation which are caused by two concurrently proceeding reactions, i.e., anhydride hydration and adduct formation. Heat released during adduct formation and anhydride hydration, when preparing the proposed catalytic system, is abstracted by cooling the system in such a way as to maintain its temperature within 0 and 25°C, thereby reliably governing the process for producing a quality end product.

Sulfuric acid which is one of the key parent components of the proposed catalytic system, is selected on account of its being a strong mineral acid which, when in the composition of the present catalytic system, forms sulfoesters together with cellulose, thus rendering cellulose acetylation in a reaction running the "homogeneous" mechanism and ultimately contributing to realization of a low--module process.

The other important parent component of the catalytic system of the present invention is N,N-dimethylacetamide which occupies an extraordinary position in the series of N,N-dialkylamides of aliphatic acids as being a specific solvent. As sulfuric acid is added to cellulose during its acylation, N,N-dimethylacetamide passes from. the adduct to a free state, increases its concentration in the acylation bath, thereby adding to the dissolving capacity of the liquid phase with respect to the cellulose acetosulfate formed. The aforesaid specific features of N,N-dimethylacetamide provide a unique possibility of carrying out a low-module cellulose acylation process at relatively low temperatures for an adequately short lapse of time.

According to a third aspect of the present invention, there is provided a cellulose acylation process, comprising the reaction of commercial-grade hydrous sulfuric acid and N,N- dimethylacetamide to produce the catalytic system according to the first aspect of the present invention, cellulose treatment with acetic acid and treatment of the resultant activated cellulose with an aliphatic acid anhydride at a temperature of 10 - 90°C in the presence of the catalytic system according to the first aspect of the present invention taken in an amount of 1.5 to 30.0 wt. % of the cellulose weight in terms of sulfuric acid, characterised in that the reaction of commercial-grade hydrous sulfuric acid and N,N- dimethylacetamide is conducted in the presence of an aliphatic acid anhydride taken in an amount of at least one mole per mole of water and in that treatment of the activated cellulose with an aliphatic acid anhydride in the presence of said catalytic system is carried out using a weight ratio of liquid phase to cellulose of 3-7:1.

According to a fourth aspect of the present invention, there is provided a cellulose acylation process, comprising the reaction of the sulfuric acid with N,N- dimethylacetamide to produce the catalytic system according to the embodiment of the first aspect of the present invention which comprises an adduct of sulfuric acid with N,N-dimethylacetamide cellulose treatment with acetic acid and treatment of the resultant activated cellulose with an aliphatic acid anhydride at a temperature of 10 - 90°C in the presence of the catalytic system according to the embodiment of the first aspect of the present invention taken in an amount of 1.5 - 30.0 wt. % of cellulose weight in terms of sulfuric acid which comprises an adduct of sulfuric acid with N,N-dimethylacetamide, characterised in that the reaction of sulfuric acid and N,N- dimethylacetamide is conducted in the presence of perchloric acid taken in an amount of 50 wt. % of the amount of sulfuric acid and in that treatment of the activated cellulose with an aliphatic acid anhydride in the presence of said catalytic system is carried out using a weight ratio of liquid phase to cellulose of 3-7:1.

In this process, one or more component of the proposed catalytic system is perchloric acid which is used as the strongest heretofore-known cellulose acylation catalyst. Perchloric acid is taken in an amount of 50.0 wt.% of the amount of sulfuric acid. The catalytic system, wherein apart from sulfuric acid use is made of perchloric acid, is prepared in the presence of an aliphatic-acid anhydride.

The herein-proposed catalytic system based on the adduct of sulfuric acid, perchloric acid, and N,N-dimethylacetamide enables one to carry out low-module cellulose acylation processesin producing acetopropionates and acebutyrates of cellulose.

There is also provided a cellulose acylation process which comprises cellulose treatment with a polar organic liquid, treatment of the resultant activated cellulose with an aliphatic acid anhydride at 10-90°C in the presence of a catalyst containing an adduct of sulfuric acid with N,N-dialkylamide of an aliphatic acid, said process using, according to a fifth aspect of the invention, acetic acid as a polar organic liquid, and the catalytic system according to the first aspect of the present invention as a catalyst, said catalytic system being taken in an amount of 1.5-30 wt.% of the cellulose weight in terms of sulfuric acid, the weight ratio between the liquid phase and cellulose being 3-7:1, respectively.

As has been stated before, acetic acid is selected as a polar organic liquid for cellulose activation. Said acid proves to be most suitable promoter for the proposed process and is instrumental in increasing cellulose reactivity to such an extent that it becomes practicable a high-rate low-module cellulose acetylation, a high degree of polymerization and filterability of the finished product, as well as synthesis of soluble primary cellulose acetates. In addition, acetic acid allows of cellulose acylation with butyric or propionic anhydride when applying the proposed catalytic system.

Whenever it is necessary to have relatively high cellulose acetylation rates and low degrees of polymerization of the finished cellulose acetate, it is expedient that the present catalytic system be used in an amount of 1.5% to 7% of the cellulose weight in terms of sulfuric acid with the following mole ratio of the components:

| | |
|---|---|
| adduct of sulfuric acid with N,N-dimethylacetamide | 1.0 |
| free sulfuric acid | 0.03-0.49. |

It is noteworthy that when the proposed catalytic system is used an an amount of 1.5-3%, the resultant cellulose triacetate is liable to gelatinize; that is why cellulose triacetate must be hydrolyzed before gelatination occurs. The present catalytic system recommended to be used in an amount of 7-30% of the cellulose weight in terms of sulfuric acid, is applied with the following mole ratio of its components:

| | |
|---|---|
| adduct of sulfuric acid with N,N-dimethylacetamide | 1.0 |
| free N,N-dimethylacetamide | 0.1-0.4. |

Said catalytic system enables one to change, during the cellulose acetylation process, both the fixed acetic acid (i.e., degree of substitution) content of the resultant cellulose acetate and the degree of its polymerization, the latter being determined by the ratio between the adduct and the free N,N-dimethylacetamide in the system. The degree of substitution depends on the amount of the adduct used and is in an inverse relationship therewith; it is also associated with the amount of the transesterified cellulose sulfoesters which, in turn, depends on the temperature and the "syrup" holdup time at the stage of acetylation. The cellulose acetylation process in the presence of the proposed catalytic system proceeds under the conditions approximating the homogeneous ones, which results in a more uniform distribution of the acetic- and sulfuric-acid residues along the chains of the macromolecules of the resulting cellulose acetosulfate. This is corroborated by the partially acetylated cellulose specimens obtained by us in the presence of the proposed catalytic system, which contain much less amount of crystalline cellulose fraction unhydrolyzable with boiling 2.5N hydrochloric acid than the specimens of the same degree of substitution produced by the so-called homogeneous process.

In our opinion, a principal prerequisite for production of soluble primary cellulose acetates is a leading destruction of the cellulose crystalline structure (rendering it amorphous) accompanied by an increase in the number of hydroxyl groups accessible to reagents and by a greater proportion of the partially substituted units of macromolecules and their faster rendering into solution.

In the proposed process for cellulose acylation there is adopted, as has been stated before, the ratio between the liquid phase and cellulose equal to 3-7:1 (the so--called acylation module 3 to 7). This becomes practicable due to a combined use of acetic acid as an activator, and the proposed catalytic system. To carry out the cellulose acylation process with a module of 3, it is expedient to use reactors featurinf high shearing forces. With such a low acylation module the reaction medium is acetic anhydride, that is, the process occurs virtually without use of any organic solvents.

When the cellulose acylation process is conducted with a module of 3 to 7, the concentration of the reactants is increased, which cuts down the duration of the process, increases filterability and degree of polymerization of the finished product. Moreover, it is the "homogeneous" cellulose acetylation mechanism that is realized in this case, which provides a possibility of producing acetone-soluble primary cellulose acetate.

One of the advantages of the proposed process is a possibility of modernizing the now-existing industrial processes for producing cellulose acetates aimed at dispensing with, patially or completely, organic solvents, acetic acid, and methylenechloride in the reaction sphere. Thus, reduction of the acetylation module to 3-5 in the acetic-acid processes for producing cellulose acetates makes it possible to reduce the amount of acetic returned for regeneration by 1.5-2.5 times.

The selected range of the acylation module values is an optimum one, its changing either side resulting in yielding the substandard end product or in a considerable deterioration of the economic indices of the proposed cellulose acylation process.

Use may be made in the proposed process also of powdered cellulose, such as, e.g., wood or cotton cellulose. Alongside with retaining the principal requirements imposed upon the known cellulose grades for acetylation, it is also recommended that powdered cellulose have a bulk density on the order of 90-105 kg/cu.m and an adequately high degree of polymerization (not below 1200).

Use of powdered cellulose is especially efficient when the process is carried out in a reactor having high shear forces because this makes it possible to solve the problems of flows synchronization in the cellulose-liquid system which is indispensable in high-efficiency continuous processes for cellulose acetate production.

There is also proposed a process for producing acetone-soluble primare cellulose acetates, comprising cellulose activation with a polar organic liquid, acetylation of the activated cellulose in the presence of a catalyst, containing an adduct of sulfuric acid with N,N-dialkylamide of an aliphatic acid, and treatment of the resultant cellulose acetate with water, followed by isolation of the end product, wherein, according to a sixth aspect of the invention, used as a polar organic liquid is acetic acid, as a catalyst is the catalytic system of the first aspect of the invention in an amount of 20-30 wt.% of the cellulose weight in terms of sulfuric acid, and wherein the free N,N-dimethyalacetamide content is 0.2-0.4 mole per mole of said adduct of sulfuric acid with N,N-dimethylacetamide; the weight ratio between the liquid phase and cellulose is 4-7:1; the resultant cellulose acetate is treated with hydrous acetic acid in two stages, that is, at the first stage treatment is carried out at a temperature of 70-85°C for 1-2 hours with hydrous acetic acid containing 4-5 wt.% of water and a neutralizer taken in an amount that provides for the free sulfuric acid content of the system, equal to 5.0-10.5wt.% of the cellulose weight. At the second stage treatment is performed with hydrous acetic acid containing 14-15wt.% of water at a temperature of 65-70°C for 1-2 hours.

The aforementioned two-stage treatment is aimed at desulfation, that is, splitting of bound sulfuric acid making part of cellulose acetate and reestablishing free hydroxyl groups instead. At the first stage the content of bound sulfuric acid is reduced to tenth fractions of a percent, after which the resultant cellulose acetate becomes soluble in acetone.

The process parameters recommended at the forst stage of treatment of the resultant cellulose acetate and concerned with water concentration, the catalyst used, the temperature and duration of the process have been found experimentally and are the optimum ones under conditions of a low module.

The range of weight percentage content of free sulfuric acid in the reaction mixture (5-10.5 wt.% of the cellulose weight) we have selected provides one more possibility of adjusting the proportion of sulfoesters in the finished product. Any change in the limit values of said range either side results in a reduced saponification rate of sulfo groups or in a higher rate of saponification of acetic groups without changing the proportion of sulfoesters in the finished product.

The second stage is aimed at further reduction of the bound sulfuric acid content. This is attained due to a higher water concentration in the reaction mixture, thus making it possible to shift the reversible reaction of saponification of the sulfo groups in a required direction.

Using the parameters we have found experimentally and recommend for the second stage, one can decrease the bound sulfuric acid content of the finished product to hundredth fractions of percent. As distinct from the stage of treatment, some saponification of the acetate groups occurs in the second-stage treatment.

Practical application of the proposed catalytic system of the aforestated composition, low module and corresponding temperature profile of the process in acetylation enables one to attain an optimum ratio between acetylation rates and cellulose destruction and thus oto obtain the degree of polymerization of the finished product within 250 and 500.

If one holds the standpoint that the rate of cellulose destruction in the course of its acetylation depends on concentration of protons, it becomes understood easily the reason why a possibility arises of controlling the degree of polymerization of the finished product in the presence of the proposed catalytic system. At the same time the proposed catalytic system makes it possible to carry out synthesis of the soluble primary cellulose acetates. Given below is a diagrammatic representation of the cellulose acetylation mechanism we have suggested. The principal part played by the adduct consists in bunding sulfuric acid into a strong complex that diminishes considerably the concentration of free sulfuric acid and its protons. As regards the cellulose sulfatation process it may proceed with participation of said complex or of free sulfuric acid. N,N-dimethylacetamide, in its turn, is an acceptor and carrier of protons with which it inter changes with acetic anhydride and acetic acid.

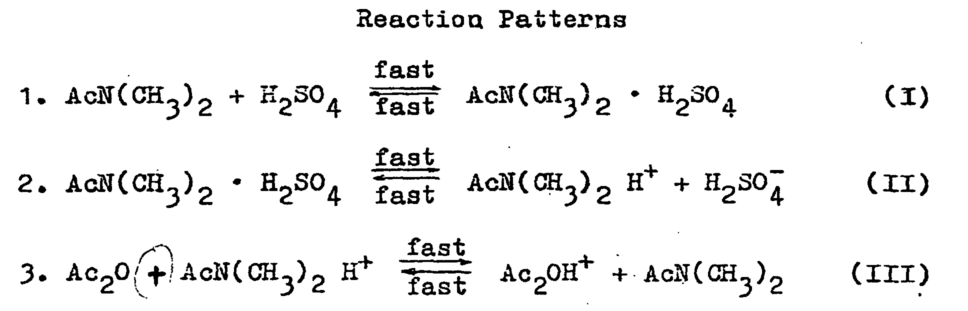

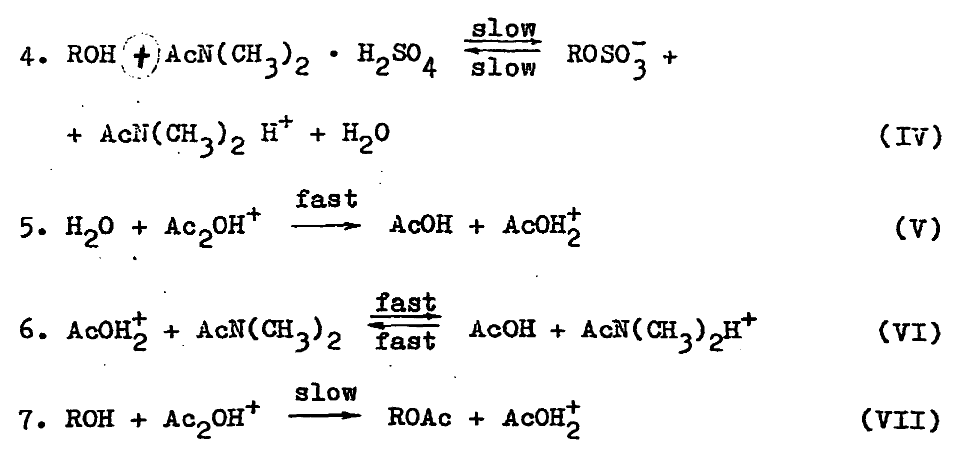

After desulfation the resultant acetate is completely soluble in acetone and is featured by a reduced viscosity of concentrated solutions thereof (that is, 1.5-2 times lower than that of diacetate produced accroding to the known so-called homogeneous process) and by a high filterability of acetone solutions which gives evidence of a chemical and physical homogeneity of the polymer being synthesized.

The aforementioned limits of the synthesis conditions provide for production of the acetone-soluble finished product, reduction of the acetylation module, sulfuric acid consumption and that of N,N-dimethylacetamide, as well as reduction of the amount of acetic acid forwarded for recovery.

The proposed catalytic system offers unique possibilities for realization an industrial process of synthesis cellulose esters with the lowest acylation module equal to 3-7 in a medium extensibly applicable in industrial practice, consisting of an aliphatic anhydride and an aliphatic acid, virtually without use of any organic solvents.

The cellulose acetylation process and the process for producing acetone-soluble cellulose acetates proposed herein make it possible to synthesize:
(a) soluble primary cellulose acetates formed according to the "homogeneous" mechanism;
(b) cellulose acetates having an increased degree of polymerization equal to 350-500;
(c) cellulose acetates featured by high filterability and reduced viscosity of the concentrated solutions thereof;
(d) mixed cellulose esters, i.e., cellulose acetobutyrates and acetopropionates.

The processes mentioned above involve no use of a deficient raw material, are ecologically pure and economically profitable.

### Best Method of Carrying Out the Invention

The catalytic system, according to the invention, is produced as follows:

### Variant I (Examples 2,4,6,8,10,11,12)

Use of the water-containing parent commercial chemicals.

A required amount of N,N-dimethyalcetamide is added under stirring to an estimated quantity of an aliphatic acid anhydride. Then a preselected amount of sulfuric acid and in some cases of perchloric acid as added to the resultant solution in small portions under stirring, at such a rate as to cool down the solution by abstracting the released heat and to maintain the temperature of the reaction mixture within 0 and 25°C.

The thus-produced catalytic system appears as a liquid misture of an appropriate composition. When acetic anhydride is used, the composition appears as a homogeneous transparent liquid mixture; when butyric or propionic anhydride is used, the composition is essentially a two-phase liquid mixture of adducts of sulfuric and perchloric acids with N,N-dimethylacetamide of the respective aliphatic acid and free N,N-dimethylacetamide.

### Variant II (Examples 1, 3, 5,7, 9)

### Use of water-free 100% parent reagents

An estimated amount of sulfuric acid is added in small portions under stirringto a required amount of N,N--dimethylacetamide at such a rate as to abstract the released heat to cool down the reaction mixture and to maintain its temperature at 0 to 25°C. The thus-produced catalytic system appears as a homogeneous liquid mixture.

Table 1 contains some specific examples of producing the herein-proposed catalytic system.

Cellulose acylation, according to the invention, is carried out as follows.

The acetic acid-activated cellulose is subjected to acylation at a temperature of 10-90°C in the presence of the herein-proposed catalytic system taken in an amount of 1.5-30 wt.% of the cellulose weight in terms of sulfuric acid for 7-350 min until a homogeneous viscous fiber--free solution is obtained, while maintaining the weight ratio of the liquid phase and cellulose equal to (3-7):1. The resultant end product is isolated by the known techniques.

Table 2 contains some specific examples of cellulose acylation in the presence of the herein-proposed catalytic system.

The process for producing primary acetone-soluble cellulose acetates is carried into effect as follows.

Cellulose activated with acetic acid is acylated with a module of 4-7 at a temperature of 10-90°C for 75-200 min in the presence of the herein-proposed catalytic system taken in an amount of 20-30 wt.% of the cellulose weight in terms of sulfuric acid, wherein the content of free N,N-dimethylacetamide is 0.2-0.4 mole per mole of an adduct of sulfuric acid with N,N-dimethylacetamide, whereupom the resultant acetate is subjected to treatment in two stages. At the first stage the acetate is treated at a temperature of 70-85°C for 1-2 hours with hydrous acetic acid containing 4.0-5.0 wt.% of water in a mixture with a neutralizing agent taken in an amount providing the free sulfuric acid content of the system equal to 5.0-10.5 wt.% of the cellulose weight. At the second stage the acetate is treated with hydrous acetic acid containing 14.0-15.0 wt.% of water at a temperature of 65-70°C for 1-2 hours. The resultant end product is then isolated by the known techniques.

Table 3 contains some examples of producing primary acetone-soluble cellulose acetates.

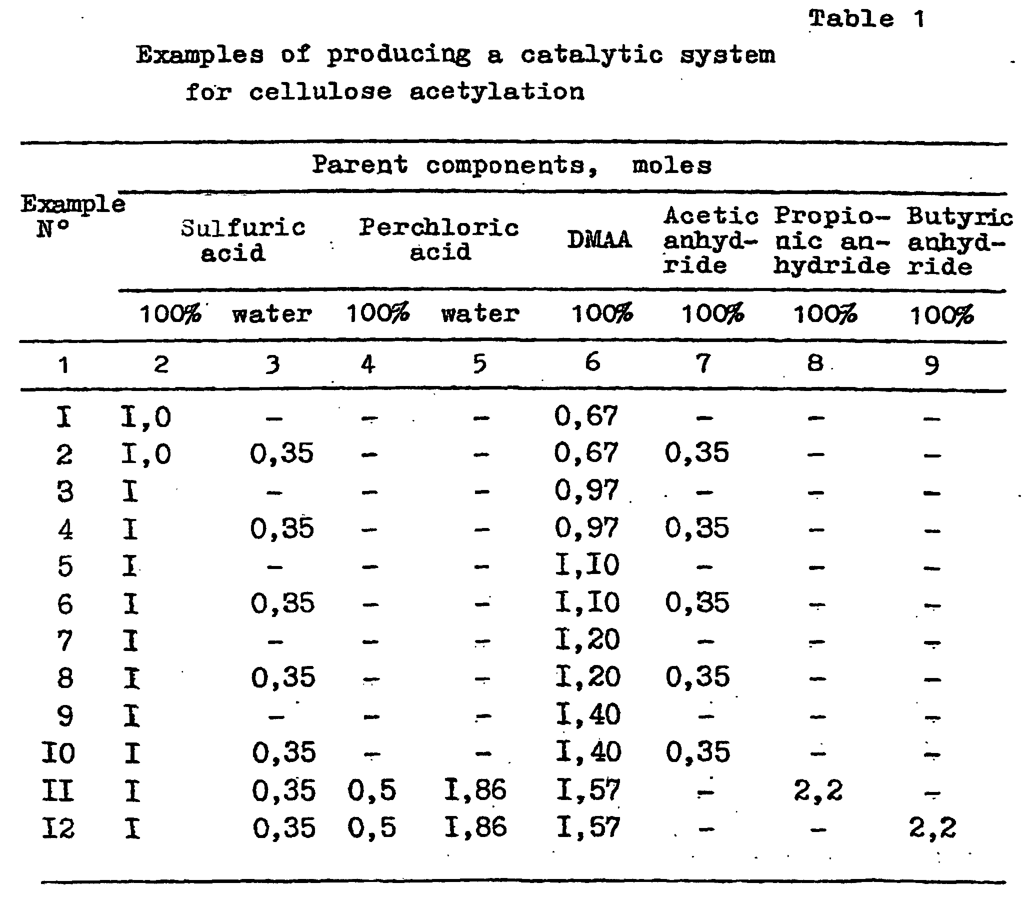

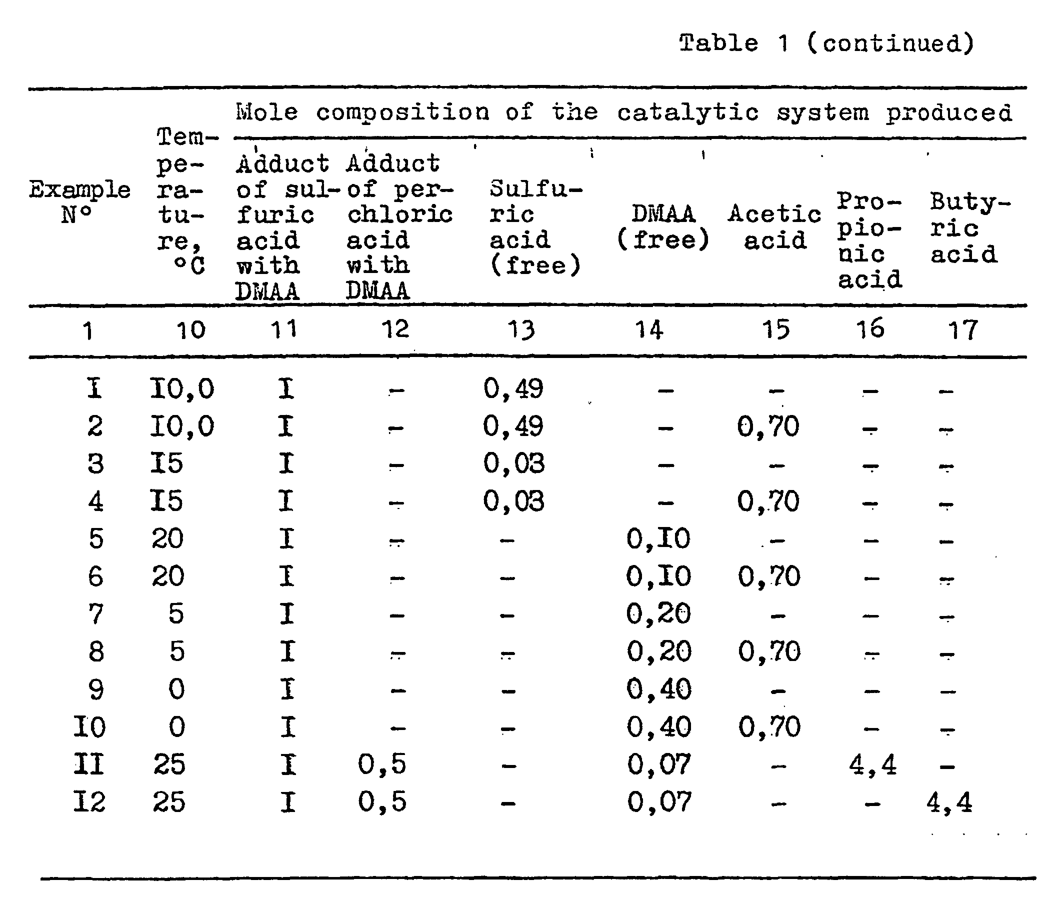

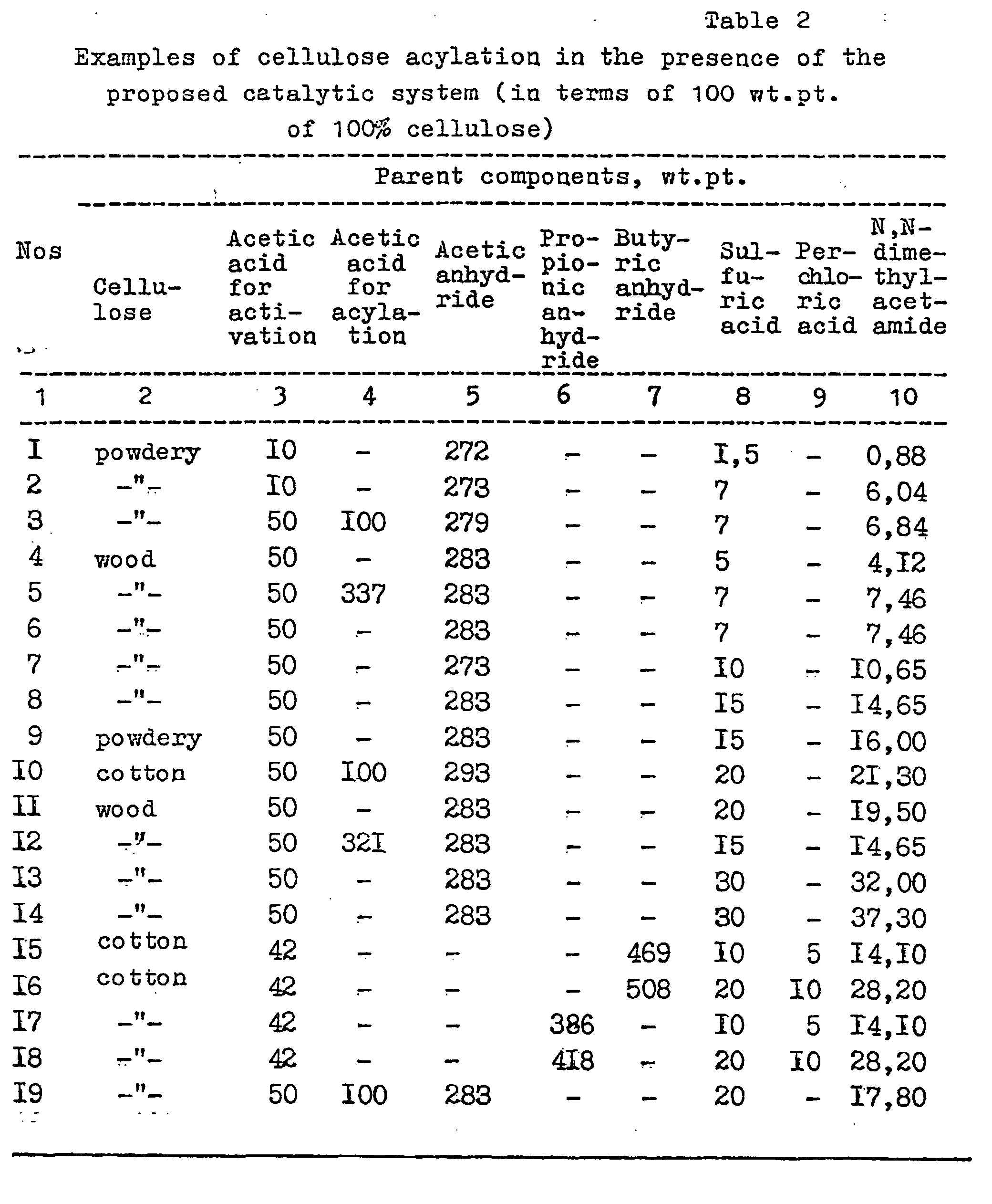

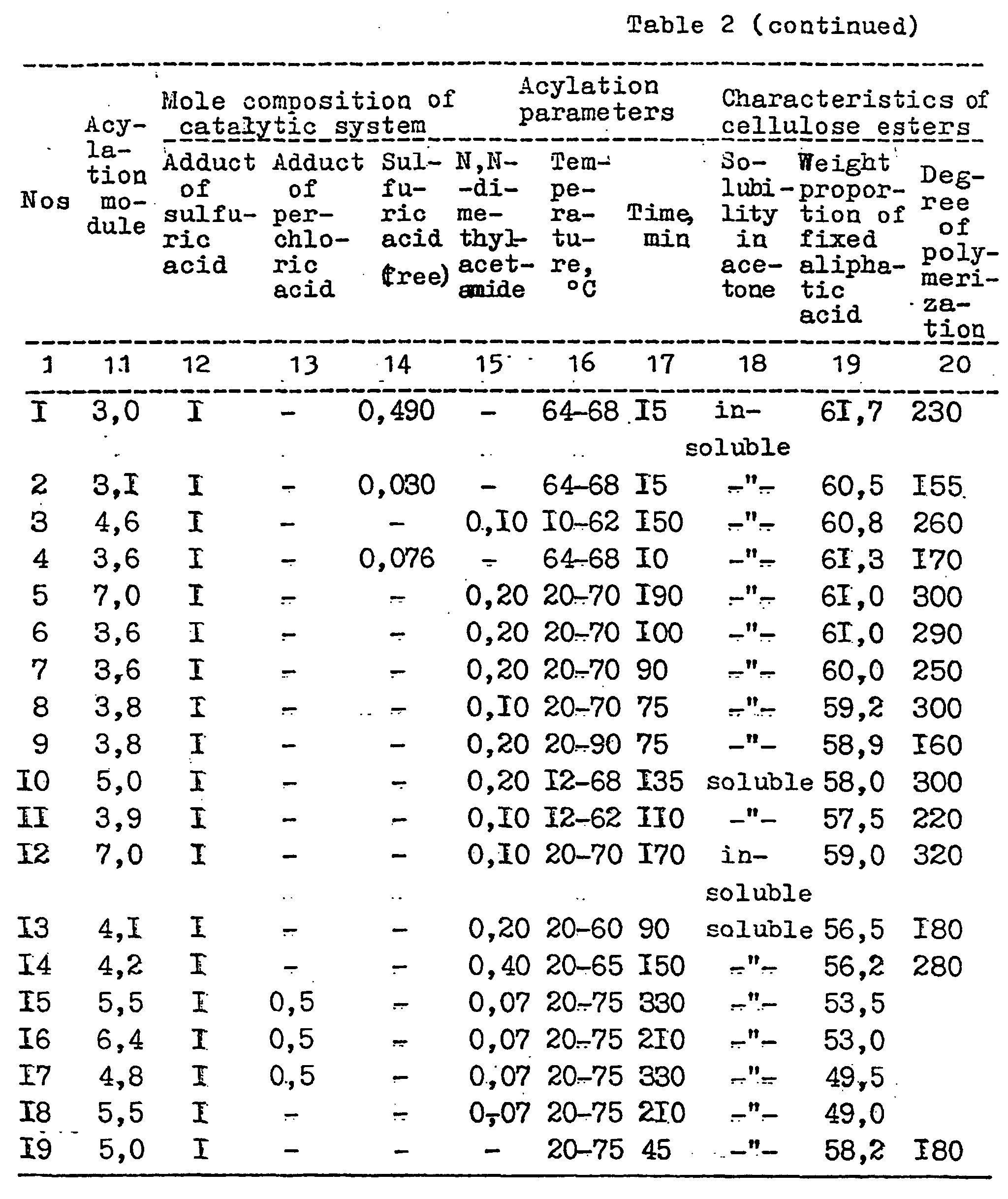

All cellulose esters produced are soluble in a methylenechloride-ethanol mixture (9:1).

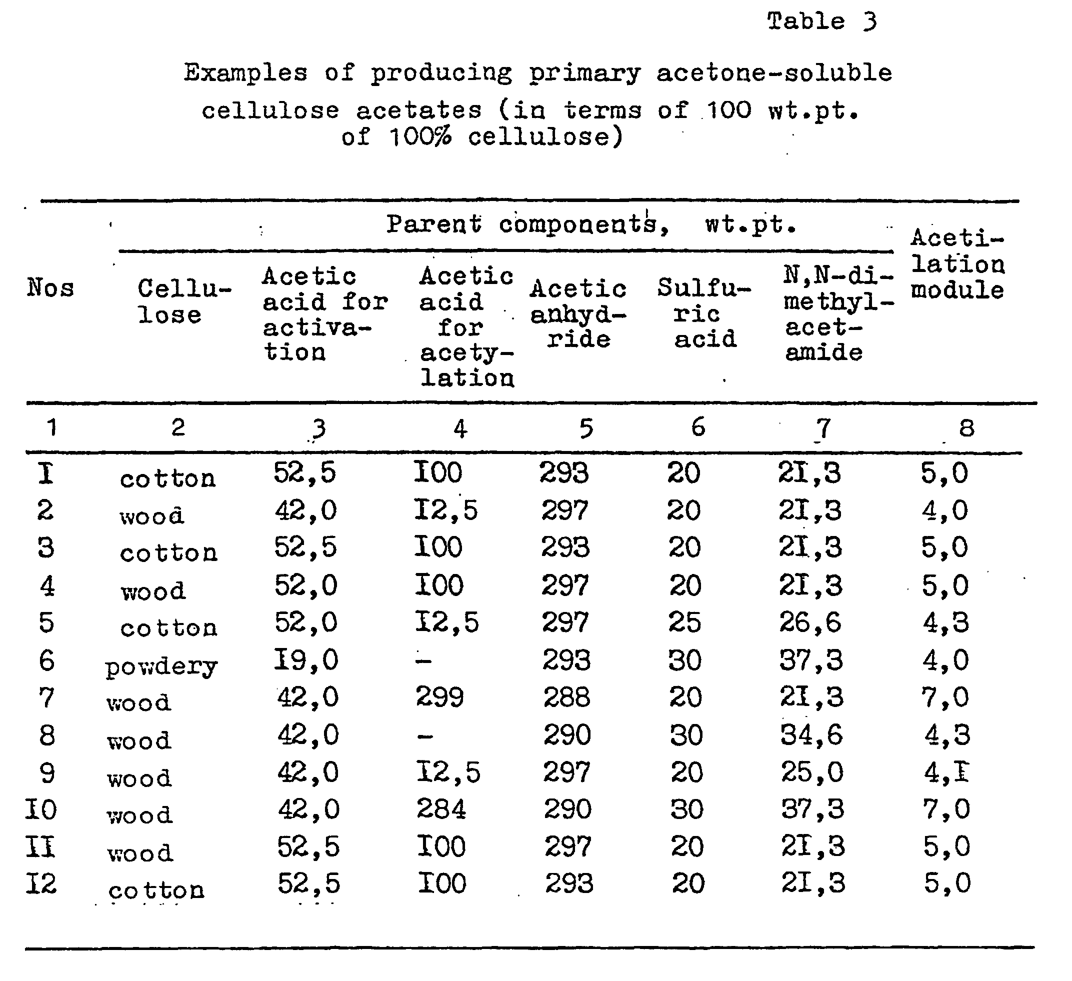

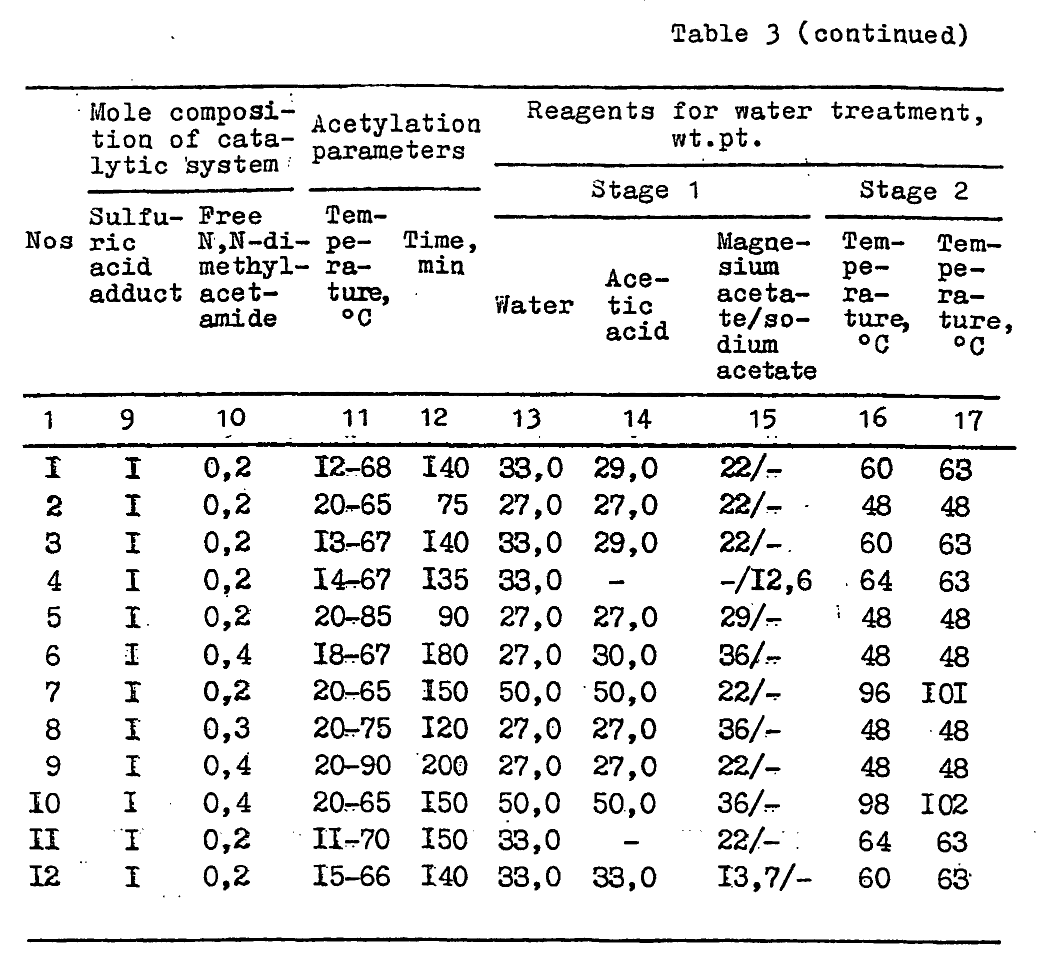

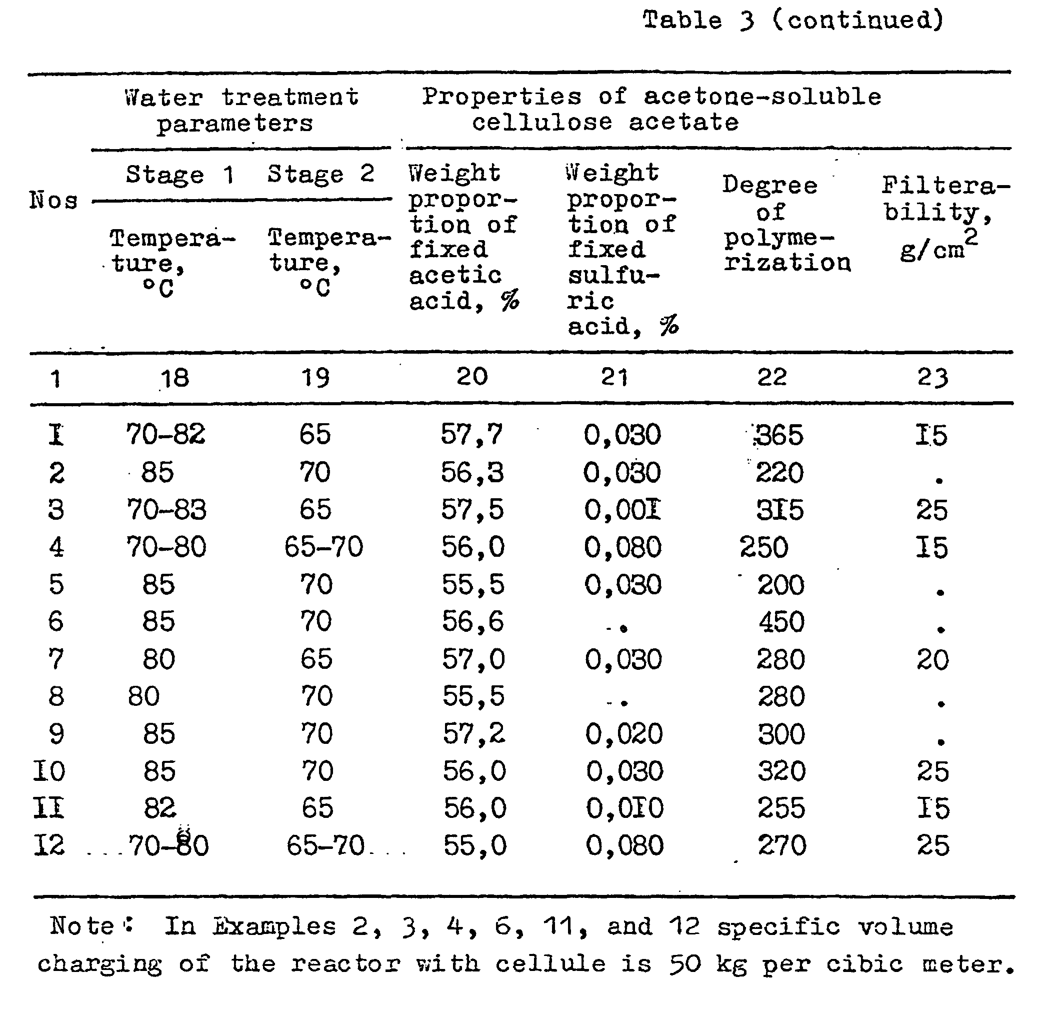

### Industrial Applicability

The herein-proposed invention can find application for modernizing the now-existing industrial processes for producing cellulose esters. Such a modernization can provide a reduced dilution module at the principale stages of the process, and a decreased amount of recoverable organic solvents with a high-quality finished. The invention can find most utility when applied for developing a basically novel continuous process for producing cellulose acetates without using any organic solvents.

## Claims

1. Use in a cellulose acylation catalytic system of a adduct of sulfuric acid with N,N- dimethylacetamide with the following mole ratio of components:
| | |
|---|---|
| adduct of sulfuric acid with N,N-dimethylacetamide | 1,0 |
| and either free sulfuric acid | 0.03-0.49 |
| or free N,N- dimethylacetamide | 0.1 - 0.4 |

2. Use in a cellulose acylation system of an adduct as claimed in claim 1 additionally comprising an adduct of perchloric acid with N,N-dimethylacetamide in a mole ratio of 0.5 per 1 mole of adduct of sulfuric acid with N,N- dimethylacetamide.

3. A cellulose acylation process, comprising the reaction of sulfuric acid with N,N- dimethylacetamide in an anhydrous medium to produce the catalytic system according to claim 1, cellulose treatment with acetic acid and treatment of the resultant, activated cellulose with an aliphatic acid anhydride at a temperature of 10 - 90°C in the presence of the catalytic system according to claim 1 taken in an amount of 1.5 - 30.0 wt. % of the cellulose weight in terms of sulfuric acid, **characterised in that** the reaction of sulfuric acid with N,N- dimethylacetamide proceeds at a temperature of 0 to 25°C and with the following mole ratio of the parent components:
| | |
|---|---|
| sulfuric acid | 1,0 |
| N,N-dimethylacetamide | 0,67-1,40 |
and **in that** treatment of the activated cellulose with an aliphatic acid anhydride in the presence of said catalytic system is carried out using a weight ratio of liquid phase to cellulose of 3-7:1.

4. A cellulose acylation process, comprising the reaction of commercial-grade hydrous sulfuric acid and N,N- dimethylacetamide to produce the catalytic system according to claim 1, cellulose treatment with acetic acid and treatment of the resultant activated cellulose with an aliphatic acid anhydride at a temperature of 10 - 90°C in the presence of the catalytic system according to claim 1 taken in an amount of 1.5 - 30.0 wt. % of the cellulose weight in terms of suphuric acid, **characterised in that** the reaction of commercial-grade hydrous sulfuric acid and N,N- dimethylacetamide is conducted in the presence of an aliphatic acid anhydride taken in an amount of at least one mole per mole of water, and **in that** treatment of the activated cellulose with an aliphatic acid anhydride in the presence of said catalytic system is carried out using a weight ratio of liquid phase to cellulose of 3-7:1.

5. A cellulose acylation process, comprising the reaction of the sulfuric acid with N,N-dimethylacetamide to produce the catalytic system according to claim 2, cellulose treatment with acetic acid and treatment of the resultant activated cellulose with an aliphatic acid anhydride at a temperature of 10 - 90°C in the presence of the catalytic system according to claim 2 taken in an amount of 1.5 - 30.0 wt. % of the cellulose weight in the terms of sulfuric acid, **characterised in that** the reaction of sulfuric acid and N,N-dimethylacetamide is conducted in the presence of perchloric acid taken in an amount of 50 wt. % of the amount of sulfuric acid, and **in that** treatment of the activated cellulose with an aliphatic acid anhydride in the presence of said catalytic system is carried out using a weight ratio of liquid phase to cellulose of 3-7:1.

6. A cellulose acylation process, comprising cellulose treatment with a polar organic liquid and treatment of the resultant activated cellulose with an aliphatic acid anhydride at a temperature of 10-90C in the presence of a catalyst containing an adduct of sulfuric acid with N,N-dialkylamide of an aliphatic acid, **characterized in that** used as a polar organic liquid is acetic acid and, as a catalyst, the catalytic system according to claims 1-2, taken in an amount of 1.5-30.0 wt.% of the cellulose weight in terms of sulfuric acid, the weight ratio between the liquid phase and cellulose being 3-7:1, respectively.

7. A process accroding to Claim 6, **characterized in that** powdered cellulose is used therein as a cellulose.

8. A process for producing acetone-soluble primary cellulose acetates, comprising cellulose activation with a polar organic liquid, acetylation of the activated cellulose in the presence of a catalyst, containing an adduct of sulfuric acid with N,N-dialkylamide of an aliphatic acid, and treatment of the resultant cellulose acetate with water, followed by isolation of the end product, **characterized in that** used as a polar organic liquid is acetic acid and as a catalyst, the catalytic system according to claims 1-2, wherein the content of free N,N-dimethylacetamide is 0.2-0.4 mole per mole of an adduct of sulfuric with N,N-dimethylacetamide, said catalytic system being taken in an amount of 20-30 wt.% of the cellulose weight in terms of sulfuric acid, while the weight ratio between the liquid phase and cellulose is 4-7:1, respectively, and the resultant cellulose acetate is treated with hydrous acetic acid in two stages:
at the first stage at a temperature of 70-85°C for 1-2 hours with hydrous acetic acid containing 4-5 wt.% of water, and a neutralizer in an amount providing a free sulfuric acid content of the system equal to 5.0-10.5 wt.% of the cellulose weight;
at the second stage cellulose acetate is treated with hydrous acetic acid containing 14-15 wt.% of water at a temperature of 65-70°C for 1-2 hours.

## Patentansprüche

1. Verwendung des Adduktes der Schwefelsäure mit dem N, N-Dimethylazetamid in einem katalytischen System zur Azylierung der Zelluluse bei dem folgenden Molverhältnis von Komponenten:
| | |
|---|---|
| - Addukt der Schwefelsäure mit dem N, N-Dimethylazetamid | 1,0 |
| und freie Schwefelsäure | 0,03 - 0,49 |
| oder freies N, N-Dimethylazetamid | 0,0 - 0,4 |

2. Verwendung des Adduktes nach Anspruch 1 in einem katalytischen System zur Azylierung der Zellulose, welches zusätzlich das Addukt der Perchlorsäure mit dem N, N-Dimethylazetamid bei einem Molverhältnis einschließt, das 0,5 Mol je 1 Mol des Adduktes der Schwefelsäure mit dem N, N -Dimethylazetamid ausmacht.

3. Verfahren zur Azylierung der Zellulose, das das Reagieren der Schwefelsäure mit dem N, N-Dimethylazetamid in einem wasserfreien Medium zwecks Herstellung des katalytischen Systems nach Anspruch 1, die Behandlung der Zellulose mit der Essigsäure und die Behandlung der als Ergebnis erhaltenen aktivierten Zellulose mit dem Anhydrid einer aliphatischen Säure bei einer Temperatur zwischen 10 und 90°C in Gegenwart des katalytischen Systems nach Anspruch 1 in einer Menge von 1,5 bis 30,0 Masse% der Zellulosemasse umgerechnet auf die Schwefelsäure umfaßt, ***dadurch gekennzeichnet,* daß** die Reaktion der Schwefelsäure mit dem N, N-Dimethylazetamid bei einer Temperatur von 0 bis 25°C bei dem folgenden Verhältnis der Ausgangskomponenten (in Molen) verläuft:
| | |
|---|---|
| - Schwefelsäure | 1,0 |
| N, N- Dimethylazetamid | 0,67 - 1,40, |
während man die Behandlung der aktivierten Zellulose mit dem Anhydrid einer aliphatischen Säure in Gegenwart des erwähnten katalytischen Systems bei einem Massenverhältnis der flüssigen Phase zur Zellulose von 3-7 : 1 vornimmt.

4. Verfahren zur Azylierung der Zellulose, das das Reagieren der industriell hergestellten wäßrigen Schwefelsäure mit dem N, N-Dimethylazetamid zwecks Herstellung des katalytischen Systems nach Anspruch 1, die Behandlung der Zellulose mit der Essigsäure und die Behandlung der als Ergebnis erhaltenen aktivierten Zellulose mit dem Anhydrid einer aliphatischen Säure bei einer Temperatur zwischen 10 und 90°C in Gegenwart des katalytischen Systems nach Anspruch 1 in einer Menge von 1,5 bis 30,0 Masse% der Zellulosemasse umgerechnet auf die Schwefelsäure umfaßt, ***dadurch gekennzeichnet,* daß** man die Reakton der industriell hergestellten wäßrigen Schwefelsäure mit dem N, N-Dimethylazetamid in Gegenwart des Anhydrids einer aliphatischen Säure in einer Menge mindestens 1 Mol je 1 Mol Wasser durchführt, während man die Behandlung der aktivierten Zellulose mit dem Anhydrid einer aliphatischen Säure in Gegenwart des erwähnten katalytischen Systems bei einem Massenverhältnis der flüssigen Phase zur Zellulose von 3-7 : 1 vornimmt.

5. Verfahren zur Azylierung der Zellulose, das das Reagieren der Schwefelsäure mit dem N, N-Dimethylazetamid zwecks Herstellung des katalytischen Systems nach Anspruch 2, die Behandlung der Zellulose mit der Essigsäure und die Behandlung der als Ergebnis erhaltenen aktivierten Zellulose mit dem Anhydrid einer aliphatischen Säure bei einer Temperatur zwischen 10 und 90°C in Gegenwart des katalytischen Systems nach Anspruch 2 in einer Menge von 1,5 bis 30,0 Masse% der Zellulosemasse umgerechnet auf die Schwefelsäure umfaßt, ***dadurch gekennzeichnet,* daß** man die Reakton der Schwefelsäure mit dem N, N-Dimethylazetamid in Gegenwart der Perchlorsäure in einer Menge von 50 Masse% der Masse der Schwefelsäure durchführt, während man die Behandlung der aktivierten Zellulose mit dem Anhydrid einer aliphatischen Säure in Gegenwart des erwähnten katalytischen Systems bei einem Massenverhältnis der flüssigen Phase zur Zellulose von 3-7 : 1 vornimmt.

6. Verfahren zur Azylierung der Zellulose, umfassend die Behandlung der Zellulose mit einer polaren organischen Flüssigkeit und die Behandlung der erhaltenen aktivierten Zellulose mit dem Anhydrid einer aliphatischen Säure bei einer Temperatur von 10 bis 90°C in Gegenwart eines Katalysators, der das Addukt der Schwefelsäure mit dem N,N-Dialkylamid einer aliphatischen Säure enthält, ***dadurch gekennzeichnet,* daß** man als polare organische Flüssigkeit die Essigsäure einsetzt, als Katalysator das katalytische System nach den Ansprüchen 1, 2 verwendet, das man in einer Menge von 1,5 bis 30,0 Masse% der Zellulosemasse umgerechnet auf die Schwefelsäure nimmt, wobei das Massenverhältnis der flüssigen Phase zur Zellulose 3-7:1 beträgt.

7. Verfahren nach Anspruch 6, ***dadurch gekennzeichnet,* daß** man als Zellulose eine pulverförmige Zellulose verwendet.

8. Verfahren zur Herstellung von azetonlöslichen Primärzelluloseazetaten, das die Aktivierung der Zellulose mit einer polaren organischen Flüssigkeit, die Azetylierung der aktivierten Zellulose in Gegenwart eines Katalysators, der das Addukt der Schwefelsäure mit dem N, N-Dialkylamid einer aliphatischen Säure enthält, und die Behandlung des sich bildenden Zelluloseazetats mit Wasser unter anschließender Absonderung des Zielproduktes umfaßt, ***dadurch gekennzeichnet*, daß** man als polare organische Flüssigkeit die Essigsäure einsetzt, als Katalysator das katalytische System nach den Ansprüchen 1, 2 verwendet, in welchem der Gehalt an freiem N, N-Dimethylazetamid 0,2 bis 0,4 Mol je 1 Mol des Adduktes der Schwefelsäure mit dem N, N-Dimethylazetamid ausmacht und welches man in einer Menge von 20,0 bis 30,0 Masse% der Zellulosemasse umgerechnet auf die Schwefelsäure nimmt, wobei das Massenverhältnis der flüssigen Phase zur Zellulose 4-7 : 1 beträgt, während man die Behandlung des sich bildenden Zelluloseazetats mit der wäßrigen Essigsäure in zwei Stufen vornimmt:
in der ersten Stufe wird bei einer Temperatur von 70 bis 85°C während 1-2 Stunden die Behandlung mit der wäßrigen Essigsäure durchgeführt, die 4,0 bis 5,0 Masse% Wasser und ein Neutralisationsmittel in einer Menge enthält, die einen Gehalt des Systems an freier Schwefelsäure gleich 5,0 bis 10,5 Masse% der Zellulosemasse gewährleistet;
in der zweiten Stufe wird die Behandlung mit der wäßrigen Essigsäure, die 14,0 bis 15,0 Masse% Wasser enthält, bei einer Temperatur von 65 bis 70°C während 1-2 Stunden durchgeführt.

## Revendications

1. Utilisation de l'adduct de l'acide sulfurique avec le N, N-diméthylacetamide dans le système catalytique pour acyler la cellulose à un rapport molaire suivant des composants :
| | |
|---|---|
| - adduct de l'acide sulfurique avec le N, N-diméthylacetamide | 1,0 |
| et acide sulfurique libre | 0,3 à 0,49 |
| ou N,N-diméthylacetamide libre | 0,0 à 0,4 |

2. Utilisation, dans le système catalytique pour acyler la cellulose, de l'adduct selon la revendication 1, comprenant supplémentairement l'adduct de l'acide perchlorique avec le N,N-diméthylacetamide à un rapport molaire constituant 0,5 de mole par 1 mole de l'adduct de l'acide sulfurique avec le N, N-diméthylacétamide.

3. Procédé d'acylation de la cellulose consistant à introduire l'acide sulfurique dans la réaction avec le N,N-diméthylacétamide dans un milieu anhydre dans le but de produire un système catalytique conforme à la revendication 1, à traiter la cellulose par l'acide acétique et à traiter par l'anhydride de l'acide aliphatique, la cellulose activée que l'on a obtenu à la suite de l'activation à la température comprise entre 10 et 90 °C en présence du système catalytique conforme à la revendication 1, en quantité de 1,5 à 30,0 % en masse par rapport à la masse de la cellulose comptée à l'acide sulfurique, **caractérisé en ce que** la réaction de l'acide sulfurique avec le N,N-diméthylacétamide se déroule à la température comprise entre 0 et 25 °C en proportions suivantes des composants de départ (en moles) :
| | |
|---|---|
| - acide sulfurique | 1,0 |
| N,N-diméthylacétamide | 0,67 à 1,40, |
et **en ce que** le traitement de la cellulose par l'anhydride de l'acide aliphatique en présence du système catalytique susmentionné est réalisé à un rapport en masse entre la phase liquide et la cellulose constituant 3-7 :1.

4. Procédé d'acylation de la cellulose consistant à introduire l'acide sulfurique, aqueux provenant de la production industrielle, dans la réaction avec le N,N-diméthylacétamide dans le but de produire un système catalytique conforme à la revendication 1, à traiter la cellulose par l'acide acétique et à traiter par l'anhydride de l'acide aliphatique la cellulose activée ainsi obtenue à la température de 10 à 90 °C en présence du système catalytique conforme à la revendication 1 en quantité de 1,5 à 30,0% en masse par rapport à la masse de la cellulose comptée pour l'acide sulfurique, **caractérisé en ce que** l'on réalise la réaction de l'acide sulfurique aqueux de production industrielle avec le N,N-diméthylacétamide en présence de l'anhydride de l'acide aliphatique en quantité d'au moins un mole par un mole d'eau et **en ce que** l'on traite par l'anhydride de l'acide aliphatique la cellulose activée en présence dudit système catalytique à un rapport en masse entre la phase liquide et la cellulose égal à la valeur de 3-7:1.

5. Procédé d'acylation de la cellulose, consistant à introduire l'acide sulfurique dans la réaction avec le N,N-diméthylacétamide dans le but d'obtenir le système catalytique selon la revendication 2, à traiter le cellulose par l'acide acétique et à traiter, par l'anhydride de l'acide aliphatique, la cellulose, activée ainsi obtenue, à la température de 10 à 90 °C en présence du système catalytique conforme à la revendication 2 en quantité de 1,5 à 30,0 % en masse. par rapport à la masse de la cellulose comptée pour l'acide sulfurique, **caractérisé en ce que** l'on réalise la réaction de l'acide sulfurique avec le N,N-diméthylacétamide en présence de l'acide perchlorique en quantité de 50 % en masse par rapport à la masse de l'acide sulfurique et que l'on traite par l'anhydride de l'acide aliphatique, la cellulose activée en présence dudit système catalytique à un rapport en masse entre la phase liquide et la cellulose constituant 3-7:1.

6. Procédé d'acylation de la cellulose consistant à traiter la cellulose par un liquide organique polaire et à traiter, par l'anhydride de l'acide aliphatique, la cellulose activée obtenue à la température de 10 à 90 °C en présence du catalyseur contenant l'adduct de l'acide sulfurique avec le N,N-diméthylacétamide de l'acide aliphatique, **caractérisé en ce que** l'on utilise l'acide acétique en qualité du liquide organique polaire, **en ce que** l'on utilise le système catalytique conforme à la revendication 1, 2, en qualité du catalyseur que l'on prend en quantité de 1,5 à 30,0 % en masse par rapport à la masse de la cellulose comptée pour l'acide sulfurique, **en ce que** le rapport en masse entre la phase liquide et la cellulose est égal à 3-7:1 respectivement.

7. Procédé selon la revendication 6, **caractérisé en ce que** l'on utilise la cellulose pulvérulente en qualité de la cellulose.

8. Procédé de production d'acétates primaires de la cellulose, solubles dans l'acétone, consistant à activer la cellulose par un liquide organique polaire, à acétyler la cellulose activée en présence du catalyseur contenant l'adduct de l'acide sulfurique avec le N,N-dialcoylamide de l'acide aliphatique et à traiter l'acétate formé de la cellulose par l'eau en extrayant ensuite le produit désiré, **caractérisé en ce que** l'on utilise l'acide acétique en qualité du liquide organique polaire, le système catalytique conforme aux revendications 1,2 en qualité du catalyseur, dont la teneur en N,N-diméthylacéamide libre est de 0,2 à 0,4 mole par 1 mole d'adduct de l'acide sulfurique avec le N,N-diméthylacétamide et que l'on prend en quantité de 20,0 à 30,0 % en massa. par rapport à la masse de la cellulose comptée pour l'acide sulfurique, **en ce que** le rapport en masse entre la phase liquide et la cellulose est de 4-7:1 respectivement, **en ce que** l'on traite l'acétate formé de la cellulose par l'acide acétique aqueux en deux étapes :
- au cours de la premère étape à la température de 70 à 85 °C pendant 1 à 2 heures, on efectue le traitement par l'acide acétique aqueux contenant de 4,0 à 5,0 % en masse d'eau et un agent neutralisateur en quantité assurant la teneur du système en acide sulfurique libre égale à la valeur de 5,0 à 10,5 % en masse par rapport à la masse de la cellulose;
- pendant la seconde étape, on effectue le traitement par l'acide acétique aqueux contenant 14,0 à 15,5 % en masse d'eau, à la température de 65 à 70 °C pendant 1 à 2 heures.
